# EUROPÄISCHE PATENTANMELDUNG

(11) **EP 0 539 850 A1**
(43) Veröffentlichungstag der Anmeldung: **05.05.1993**
(21) Anmeldenummer: 92117962.8
(22) Anmeldetag: 21.10.1992
(51) Int. Cl.: A22C 13/02

(54) **Vorrichtung zum Raffen von schlauchförmigem Verpackungsmaterial, insbesondere Kunstdarm für die Wurstherstellung**

(30) Priorität: 30.10.1991 DE 4135702
(71) Anmelder: Kollross, Günter, D-64521 Gross Gerau (DE)
(72) Erfinder: Kollross, Günter, D-64521 Gross Gerau (DE)
(74) Vertreter: Jochem, Bernd, Dipl.-Wirtsch.-Ing.

(57) **Zusammenfassung**

Die Vorrichtung dient zum axialen Raffen von schlauchförmigem Verpackungsmaterial, z. B. Kunstdarm für die Wurstherstellung. Sie hat ein oder mehrere Raffrohre (10, 12), die abwechselnd in ein Raffwerkzeug (22) und in ein Preßwerkzeug (34) einfahrbar sind. Um die Durchbiegung der Raffrohre (10, 12) unter der Last des gerafften Schlauchmaterials (40) und die Schwingungen der Raffrohre (10, 12) infolge von Beschleunigungen zu verringern, ist eine zusammen mit den Raffrohren (10, 12) verfahrbare Abstützung (42) für diese vorgesehen. Die Abstützung (42) greift im mittleren oder vorderen Bereich an den Raffrohren (10, 12) an und kann von diesen zurückgezogen werden, um nicht mit Werkzeugen (22, 28, 30, 34, 36) der Raffstation (18) oder der Preß- und Abziehstation (20) zu kollidieren.

## Beschreibung

Die Erfindung betrifft eine Vorrichtung zum axialen Raffen von schlauchförmigem Verpackungsmaterial, insbesondere Kunstdarm für die Wurstherstellung, in Abschnitten auf einem Raffrohr, welches in einer Raffstation aus einer zurückgezogenen Ausgangsstellung beim Einführen in ein Raffwerkzeug mit davor angeordnetem Schneidwerkzeug vorschiebbar, während des Raffens in Richtung zur Ausgangsstellung zurückziehbar, anschließend zusammen mit dem gerafften Schlauchabschnitt quer zu seiner Längserstreckung zu einer Preß- und Abziehstation bewegbar und dort aus der zurückgezogenen Ausgangsstellung in ein Preßwerkzeug einfahrbar und zum Abstreifen des gerafften Schlauchabschnitts wieder zur Ausgangsstellung zurückziehbar ist.

Die bekannten derartigen Raffmaschinen unterscheiden sich in Einzelheiten der Werkzeuge, ihnen allen ist aber die Problematik gemeinsam, daß mit verhältnismäßig langen, dünnen Raffrohren, die nur an ihrem hinteren Ende gelagert sind, in Werkzeuge eingefahren und eine große Schlauchlänge in stark gerafftem Zustand aufgenommen werden muß, unter deren Gewicht sich die Rohre durchbiegen. Vor allem dann, wenn in üblicher Weise zwei oder mehr Raffrohre an einer Revolverscheibe gelagert und abwechselnd nacheinander in die Raffstation und in die Preß- und Abziehstation gebracht werden, geraten die Raffrohre während der Drehbewegungen der Revolverscheibe ins Schwingen. Um die Schwingungen abklingen zu lassen, bis die vorderen Enden der Raffrohre in ein Werkzeug eindringen, kann man sie nur verhältnismäßig langsam aus der Ausgangsstellung vorfahren.

Der Erfindung liegt deshalb die Aufgabe zugrunde, eine Vorrichtung der eingangs genannten Art zu schaffen, die das Raffen längerer Schlauchabschnitte innerhalb einer kürzeren Taktzeit als bisher gestattet und bei der Zerstörungen der Raffrohre und Werkzeuge infolge Kollision wirksam verhindert sind.

Vorstehende Aufgabe wird erfindungsgemäß dadurch gelöst, daß das Raffrohr im mittleren oder vorderen Bereich durch ein zusammen mit ihm axial verfahrbares Zentrierlager abstützbar ist, welches an bestimmten Stellen seiner Bewegungsbahn vom Raffrohr zurückziehbar und wieder in die Abstützstellung heranführbar ist.

Mit der vorgeschlagenen zusätzlichen Abstützung durch ein zurückziehbares mittleres Zentrierlager kann mit längeren Raffrohren gearbeitet werden, z. B. statt bisher mit etwa 1 m nunmehr mit etwa 1,30 m oder 1,40 m Länge, weil im leeren und beladenen Zustand die Durchbiegung beseitigt oder jedenfalls wesentlich vermindert wird, und dementsprechend wächst auch die maximale Länge der gerafften Schlauchabschnitte. Die Längs- und Querbeschleunigungen sowie die Verfahrgeschwindigkeiten können ebenfalls wesentlich größer sein, ohne daß unzulässig große Schwingungen und Ausschläge des freien Endes des Raffrohrs beim Einfahren in ein Werkzeug zu fürchten wären. Schließlich eignet sich die Erfindung auch gut zur Anwendung bei Raffmaschinen mit zwei oder mehr Raffrohren an einer Revolverscheibe, weil die Zentrierlager der Raffrohre eine gemeinsame Halterung haben und in den freien Raum zwischen der Raffstation und der Preß- und Abziehstation zurückgezogen werden können, wo sie nicht mit den Werkzeugen der beiden Stationen kollidieren.

Zur weiteren Erläuterung der Erfindung und bevorzugter Ausgestaltungsmerkmale wird nachstehend ein gezeichnetes Ausführungsbeispiel beschrieben. Es zeigen:
- Fig. 1: eine schematische Draufsicht von oben auf eine Raffmaschine mit zwei zwischen einer Raffstation und einer Preß- und Abziehstation hin und her verschwenkbaren Raffrohren;
- Fig. 2: einen Teillängsschnitt durch den Mechanismus einer lösbaren mittleren Abstützung der Raffrohre;
- Fig. 3: eine Teil-Frontansicht der Abstützung nach Fig. 2;
- Fig. 4: eine Teil-Frontansicht des Antriebs der lösbaren Abstützung nach Fig. 2 und 3.

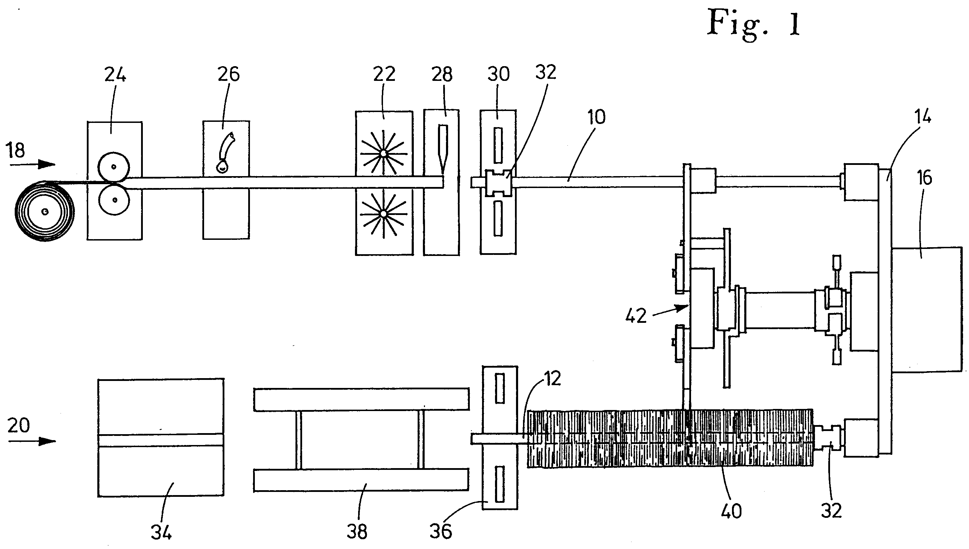

Fig. 1 gibt eine Übersicht über den grundsätzlichen Aufbau einer Raffvorrichtung mit zwei Raffrohren 10, 12, die an ihren hinteren Enden frei auskragend an der Stirnfläche einer Revolverscheibe 14 befestigt sind. Die aus den Raffrohren 10, 12 und der Revolverscheibe 14 bestehende Einheit ist in bekannter Weise durch Antriebe 16 längs einer nicht gezeigten Führung axial verfahrbar und um 180° hin und her drehbar, so daß jedes Raffrohr abwechselnd in eine Raffstation 18 und in eine Preß- und Abziehstation 20 kommt. In der Darstellung nach Fig. 1 befindet sich das mit 10 bezeichnete Raffrohr in der Raffstation und gleichzeitig das Raffrohr 12 in der Preß- und Abziehstation. Da die Werkzeuge und Einrichtungen in den beiden Stationen 18, 20 für sich bekannt sind, wurden sie in Fig. 1 nur schematisch angedeutet.

In der Raffstation 18 befindet sich ein Raffwerkzeug 22, z. B. in Form von Raffrädern oder Raffwalzen, mit deren Hilfe Schlauchmaterial auf dem jeweils in das Raffwerkzeug eingeführten Raffrohr 10 bzw. 12 axial stark gerafft und dabei ziehharmonikaartig gefaltet wird. Das Schlauchmaterial wird von einer sich mit Bezug auf Fig. 1 links befindenden Vorratsrolle (nicht gezeigt) abgezogen und über Quetschwalzen 24 sowie im Beispielsfall einen Außenöler 26 dem Raffwerkzeug 22 zugeführt. Auf Seiten der Revolverscheibe 14 ist vor dem Raffwerkzeug 22 ein rotierendes Messer 28 zum Abschneiden von gerafften Schlauchabschnitten bestimmter Länge angeordnet, und davor befindet sich noch eine hier als Abzugsbüchsenhalter 30 bezeichnete Einrichtung, welche eine in der Ausgangsstellung nach Fig. 1 auf dem vorderen Ende des Raffrohrs 10 sitzende Abzugsbüchse 32 beim Einfahren des Raffrohrs 10 in das Raffwerkzeug 22 erfaßt, festhält und dadurch zum hinteren Ende des Raffrohrs schiebt.

In der Preß- und Abziehstation 20 befindet sich als Preßwerkzeug ein Preßbock 34, und eine Abstreifeinrichtung 36, neben der eine Aufnahme- und Übergabeeinrichtung 38 angeordnet ist, durch welche ein von einem Raffrohr 10 bzw. 12 abgestreifter, geraffter Schlauchabschnitt 40, der üblicherweise als Schlauchraupe bezeichnet wird, zur Weiterverarbeitung oder Verpackung ausgespeist wird.

Raffvorrichtungen der vorstehend beschriebenen Art sind seit langem in vielen Ausführungsformen bekannt. Die verschiedenen Werkzeuge und Einrichtungen in der Raffstation 18 und in der Preß- und Abziehstation 20 bilden keinen Teil der vorliegenden Erfindung. Es versteht sich, daß im Einzelfall auch noch weitere Werkzeuge oder Einrichtungen hinzukommen oder einzelne der genannten Werkzeuge und Einrichtungen entfallen oder durch andere Einheiten ersetzt werden können.

Auch die Funktionsweise der Raffvorrichtung braucht nur kurz skizziert zu werden, da sie ebenfalls bekannt ist. Aus der in Fig. 1 gezeigten Ausgangsstellung fährt die Revolverscheibe 14 im Schnellgang vor, wobei das eine Raffrohr 10 fast vollständig in das Raffwerkzeug 22 und das aufgeblasene Schlauchende einfährt. Die Abzugsbüchse 32 wird dabei, wie erwähnt, von dem Abzugsbüchsenhalter 30 festgehalten und zum hinteren Ende des Raffrohrs 10 geführt. Dann beginnt das Raffwerkzeug 22 zu arbeiten, und während des Raffvorgangs fährt die Revolverscheibe 14 wieder mit Bezug auf Fig. 1 nach rechts zurück, und zwar mit der Geschwindigkeit, mit welcher das Raffwerkzeug 22 eine Schlauchraupe 40 erzeugt. Nachdem eine bestimmte Schlauchlänge zur Raupe 40 gerafft worden ist, schneidet das rotierende Messer 28 diese vom Schlauchvorrat ab, und danach fährt die Revolverscheibe mit den Raffrohren 10 und 12 in die ganz rechts befindliche Ausgangsstellung zurück. Dort erfolgt dann eine Drehbewegung der Revolverscheibe 14 um 180°, so daß das Raffrohr 10 mit der darauf gehaltenen, gerade zuvor erzeugten Schlauchraupe 40 in die Preß- und Abziehstation 20 gelangt, während gleichzeitig das andere Raffrohr 12 in die Raffstation 18 geschwenkt wird.

Im nächsten Arbeitszyklus wird das Raffrohr 12 in das Raffwerkzeug 22 eingeführt, während gleichzeitig das Raffrohr 10 mit seinem freien Ende in den Preßbock 34 fährt, wobei die Schlauchraupe 40 axial komprimiert wird. Wenn danach, während des nun folgenden Raffvorgangs zur Erzeugung einer neuen Schlauchraupe auf dem Raffrohr 12 die Revolverscheibe 14 wieder in Richtung zur Ausgangsstellung nach rechts zurückfährt, erfaßt die Abstreifeinrichtung 36 die auf dem Raffrohr 10 sitzende Abzugsbüchse 32 und hält sie axial fest, so daß die davor auf dem Raffrohr 10 sitzende komprimierte Schlauchraupe 40 über das freie Ende des Raffrohrs 10 abgestreift, von der Aufnahme- und Übergabeeinrichtung 38 erfaßt und ausgespeist wird. Nach dem Zurückschwenken des Raffrohrs 10 in die Raffstation 18 wiederholt sich der beschriebene Vorgang. Er findet in gleicher Weise, um einen Zyklus versetzt, auch auf dem Raffrohr 12 statt.

Das Problem bei einer derartigen Raffvorrichtung besteht darin, daß die Raffrohre 10, 12 sehr weit frei auskragen, sich unter der Last der Schlauchraupen biegen und durch die Schwenk- und Verfahrbewegungen der Revolverscheibe 14 in Schwingung geraten, so daß nur eine verhältnismäßig kurze Schlauchlänge auf jedem Rohr aufgenommen werden kann, verhältnismäßig langsam zum Raffwerkzeug 22 und Preßbock 34 vorgefahren und darin eingefahren werden muß und dennoch in der Praxis immer wieder Störungen dadurch auftreten, daß die freien Enden der Raffrohre gegen eines der Werkzeuge stoßen.

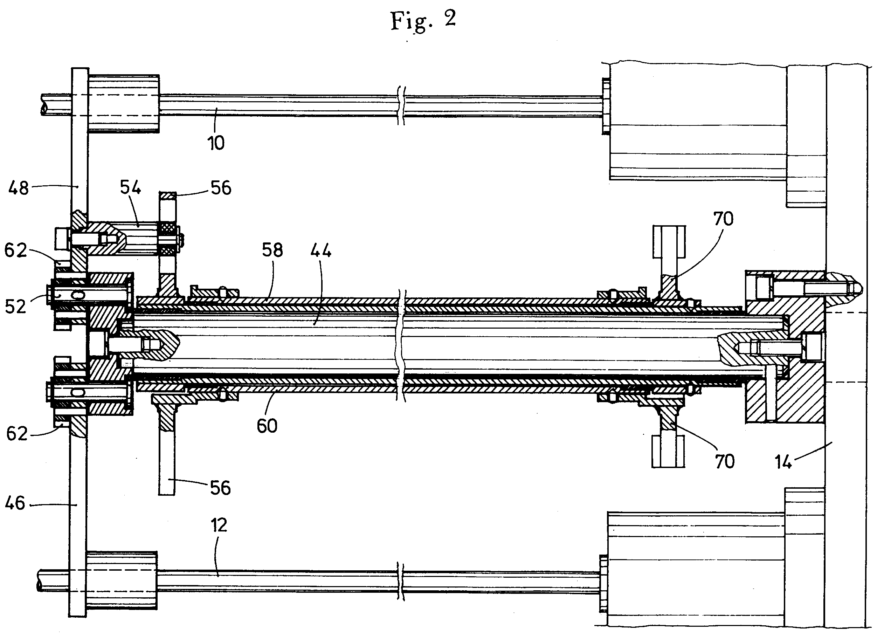

Um diese Schwierigkeiten zu überwinden, ist bei der dargestellten Raffvorrichtung eine insgesamt mit 42 bezeichnete Abstützung vorhanden, welche in zentraler Lage an der Revolverscheibe 14 befestigt ist und Zentrierlager für beide Raffrohre 10 und 12 bildet, um diese während der Drehbewegung der Revolverscheibe 14 und beim Einfahren in die Werkzeuge der Raffstation 18 und der Preß- und Abziehstation 20 zu stützen und zu zentrieren. Die Konstruktion der Abstützung 42 wird nachstehend anhand der Fig. 2 bis 4 näher erläutert.

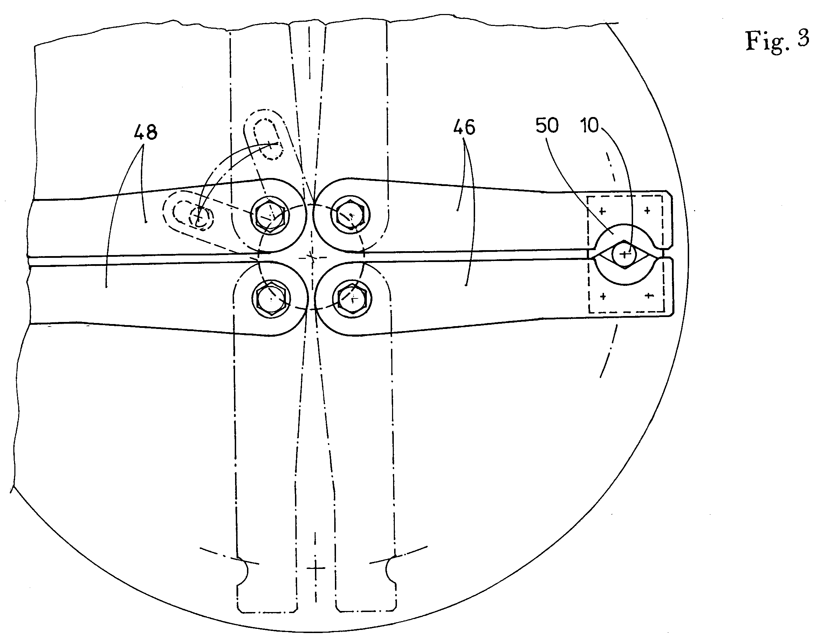

Der zentrale, tragende Teil der Abstützung 42 ist eine massive Achse 44, deren vorderes, freies Ende in Fig. 2 links und deren hinteres, mit der Revolverscheibe 14 verschraubtes Ende in Fig. 2 rechts gezeigt ist. Am vorderen Ende sind zwei Paare von Zangenhebeln 46 und 48, also insgesamt vier Zangenhebel, drehbar gelagert (siehe Fig. 3). Jedes Paar Zangenhebel 46 bzw. 48 kann in eine in Fig. 3 in ausgezogenen Linien dargestellte Abstützstellung geschwenkt werden, in welcher ein am freien Ende der Zangenhebel angeordnetes Zangenmaul eines der Raffrohre 10 bzw. 12 erfaßt. An den Zangenhebeln befestigte, das Zangenmaul bildende Lager-Halbschalen 50 stellen paarweise jeweils ein Zentrierlager 50 für eines der Raffrohre 10, 12 dar. Durch Verschwenken der Zangenhebel 46, 48 um jeweils etwa 90° in die in Fig. 3 strichpunktiert gezeigte offene Stellung wird die Unterstützung und Zentrierung der Raffrohre 10, 12 aufgehoben, und es werden die Zangenhebel 46, 48 mit den Zentrierlagern 50 von den Raffrohren 10, 12 zurückgezogen.

In der Ausgangsstellung und während des Raffens befinden sich die beiden Raffrohre 10 und 12 in einer gemeinsamen, im wesentlichen horizontalen Ebene nach Fig. 1 und 3. Um die Raffrohre zu zentrieren, erstrecken sich auch die Zangenhebel 46, 48 in der Ausgangsstellung im wesentlichen horizontal. In dieser Lage würden sie beim axialen Vorfahren der Revolverscheibe 14 gegen die Werkzeuge in der Raffstation 18 und in der Preß- und Abziehstation 20 anstossen. Wenn die Zangenhebel 46, 48 jedoch in die offene Stellung verschwenkt worden sind, in der sie sich im wesentlichen senkrecht erstrecken, nimmt die gesamte Abstützung 42 zwischen der Raffstation 18 und der Preß- und Abziehstation 20 eine mittlere Lage ein, in der sich beim axialen Verfahren der Revolverscheibe 14 die Zangenhebel 46, 48 und Zentrierlager 50 an den Werkzeugen und Einrichtungen der beiden Stationen 18 und 20 vorbeibewegen.

Die Zangenhebel 46, 48 sind einzeln auf am freien Ende der Achse 44 exzentrisch zu deren Mittellängsachse befestigten Lagerbolzen 52 drehbar gelagert. Von jedem Paar Zangenhebel 46 bzw. 48 ist einer der Zangenhebel über einen sich axial erstreckenden Mitnehmer 54 mit einem radial auskragenden Arm 56 jeweils an einer von zwei konzentrisch auf der Achse 44 gelagerten Hohlwellen 58 bzw. 60 verbunden. Wenn sich eine der Hohlwellen 58 bzw. 60 um die Achse 44 dreht, nimmt sie über den drehfest mit ihr verbundenen Arm 56 und den daran angreifenden Mitnehmer 54 den mit diesem verbundenen Zangenhebel 46 bzw. 48 in Umfangsrichtung mit. Da die Drehachsen der Hohlwellen 58 und 60 einerseits sowie der Zangenhebel 46 bzw. 48 andererseits nicht miteinander fluchten, greift der Mitnehmer 54 radial verschieblich am Arm 56 an, der zu diesem Zweck z. B. mit einem Langloch versehen sein kann, in welches der Mitnehmer 54 eingreift.

Jeder Zangenhebel 46, 48 ist drehfest und konzentrisch mit einem Zahnrad 62 verbunden. Die beiden Zahnräder 62 jedes Zangenhebelpaars 46 bzw. 48 sind in Kämmeingriff, so daß der Drehantrieb jeweils eines Zangenhebels jedes Paars durch eine der Hohlwellen 48 bzw. 60 über einen Arm 56 und einen Mitnehmer 54 genügt, um gleichzeitig über die zusammenwirkenden Zahnräder 62 auch den anderen Zangenhebel desselben Paars aus der Abstützstellung in die geöffnete Stellung und umgekehrt mitzunehmen.

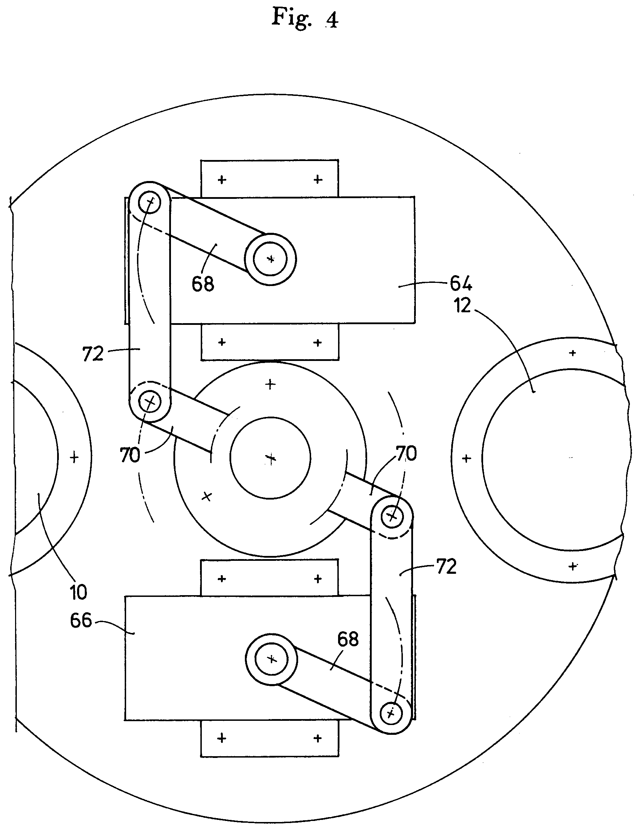

Der Drehantrieb der Hohlwellen 58 und 60 geht am besten aus Fig. 4 hervor. Danach sind auf gegenüberliegenden Seiten der Achse 44 an der Frontseite der Revolverscheibe 14 zwei getrennt steuerbare Drehantriebseinheiten 64 und 66 befestigt, deren Abtriebswellen jeweils drehfest mit einem Kurbelarm 68 verbunden sind. Auch an den hinteren Enden der Hohlwellen 58, 60 ist jeweils ein Kurbelarm 70 drehfest angebracht (siehe auch Fig. 2). Es ist jeweils ein Kurbelarm 68 über eine Koppel 72 gelenkig mit einem Kurbelarm 70 verbunden. Auf diese Weise bewirkt eine Drehung der Abtriebswelle der Drehantriebseinheit 64 um etwa 90° eine entsprechende Drehung der radial inneren Hohlwelle 58 und damit der Zangenhebel 48, während eine Drehung der Abtriebswelle der Drehantriebseinheit 66 um etwa 90° zu einer entsprechenden Drehbewegung der radial äußeren Hohlwelle 60 und damit auch der Zangenhebel 46 führt. Die Versorgung der Drehantriebseinheiten 64 und 66 mit Energie bereitet keine Schwierigkeiten, da die Revolverscheibe 14 keine vollen Umdrehungen ausführt, sondern nur jeweils um 180° hin und her schwenkt. Biegsame Versorgungsleitungen können dieser begrenzten Drehbewegung folgen.

Die Zentrierlager 50 stützen die Raffrohre 10 und 12 immer an derselben axialen Stelle ab, unabhängig davon, ob auf dem Raffrohr gerade eine Schlauchraupe 40 sitzt oder nicht. Da die Schlauchraupe einen größeren Außendurchmesser hat als das Raffrohr 10 bzw. 12, haben die das Zentrierlager 50 bildenden Lagerhalbschalen vorzugsweise eine V-förmige Gestalt, so daß sie sich gleichmäßig sowohl an kleinere als auch an größere Durchmesser anlegen können.

Die Betätigung der Zangenhebelpaare 46 und 48 erfolgt im Beispielsfall durch Druckluft, kann aber auch z. B. hydraulisch oder elektrisch erfolgen.

Zu Beginn eines Arbeitszyklus, wenn sich also die Revolverscheibe 14 in der Ausgangsstellung gemäß Fig. 1 befindet, nehmen die Zangenhebel 46, 48 die in Fig. 3 in ausgezogenen Linien dargestellte Abstützstellung ein. Sie behalten beim Vorfahren der Raffrohre zu den Werkzeugen hin diese Stellung bei, öffnen dann allerdings zu unterscheidlichen Zeitpunkten. In der Raffstation muß das Zentrierlager 50 beim Vorfahren öffnen, nachdem das freie Ende des Raffrohrs in das Raffwerkzeug 22 eingefahren ist, aber bevor die während des Vorfahrens auf dem Raffrohr zurückgeschobene Abzugsbüchse 32 gegen das Zentrierlager 50 stößt. In der Preß- und Abziehstation 20 bleibt dagegen das Zentrierlager 50 beim Vorfahren der Revolverscheibe 14 länger in der Abstützstellung, weil die geöffnete Abstreifeinrichtung 36 und die Aufnahme- und Übergabeeinrichtung 38 die während des Vorfahrens auf dem Raffrohr sitzende Schlauchraupe 40 und das radial außen an dieser angreifende Zentrierlager 50 passieren lassen. Letzteres wird erst geöffnet, nachdem das freie Ende des Raffrohrs sicher in den Preßbock 34 eingeführt worden ist.

Beim Zurückfahren der Revolverscheibe 14 in die Ausgangsstellung kann das in der Raffstation befindliche Zentrierlager 50 zu einem beliebigen Zeitpunkt, nachdem es an sonst kollidierenden Werkzeugen und Einrichtungen vorbeigefahren worden ist, wieder in die Abstützstellung gebracht werden, wobei die V-förmigen Lagerhalbschalen des Zentrierlagers 50 außen an der in der Raffstation erzeugten Schlauchraupe 40 zur Anlage kommen. Entsprechendes gilt für das Zentrierlager 50 in der Preß- und Abziehstation 20. Es kann während der Rückzugsbewegung der Revolverscheibe 14 am leeren Raffrohr zur Anlage gebracht werden, nachdem sich die Zangenhebel 46 bzw. 48 an der Abstreifeinrichtung 20 vorbeibewegt haben. Wichtig ist jedoch, daß sich beide Zentrierlager 50 in Abstützstellung befinden, bevor die Revolverscheibe 14 ihre Drehbewegung um 180° beginnt, um auf diese Weise Biegungen und Schwingungen der Raffrohre infolge der Querbeschleunigungen zu verhindern.

Die axial mitfahrende, gesteuert in Abstützstellung und in eine ungefährliche zurückgezogene Neutralstellung bewegbare Abstützung 42 erlaubt, wie sich aus dem Voranstehenden ergibt, größere Raffrohrlängen, das Raffen längerer und schwererer Schlauchraupen, eine ganz wesentliche Verkürzung des Arbeitszyklus infolge stärkerer Beschleunigungen und höherer Geschwindigkeiten der Revolverscheibe 14 beim Schwenken und axialen Verfahren sowie eine Kostensenkung durch Vermeidung von Störungen und Zerstörungen durch gegen Werkzeuge stoßende Raffrohre und Einsparung sonstiger Hilfsmaßnahmen zur Begrenzung dieser Gefahr.

## Patentansprüche

1. Vorrichtung zum axialen Raffen von schlauchförmigem Verpackungsmaterial, insbesondere Kunstdarm für die Wurstherstellung, in Abschnitten auf einem an seinem hinteren Ende gehaltenen Raffrohr (10, 12), welches in einer Raffstation (18) aus einer zurückgezogenen Ausgangsstellung beim Einführen in das schlauchförmige Verpackungsmaterial in ein Raffwerkzeug (22) mit davor angeordnetem Schneidwerkzeug (28) vorschiebbar, während des Raffens in Richtung zur Ausgangsstellung zurückfahrbar, anschließend zusammen mit dem gerafften Schlauchabschnitt (40) quer zu seiner Längserstreckung zu einer Preß- und Abziehstation (20) bewegbar und dort aus der zurückgezogenen Ausgangsstellung in ein Preßwerkzeug (34) einfahrbar und zum Abstreifen des gerafften Schlauchabschnitts (40) wieder zur Ausgangsstellung zurückziehbar ist, **dadurch gekennzeichnet**, daß das Raffrohr (10, 12) im mittleren oder vorderen Bereich durch ein zusammen mit ihm axial verfahrbares Zentrierlager (42, 50) abstützbar ist, welches an bestimmten Stellen seiner Bahn vom Raffrohr (10, 12) zurückziehbar und wieder in Abstützstellung heranführbar ist.

2. Vorrichtung nach Anspruch 1, **dadurch gekennzeichnet**, daß das Zentrierlager (42, 50) in Abstützstellung bei der Querbewegung des Raffrohrs (10, 12) zwischen der Raffstation (18) und der Preß- und Abziehstation (20) mitbewegbar ist.

3. Vorrichtung nach Anspruch 1 oder 2, **dadurch gekennzeichnet**, daß in ansich bekannter Weise wenigstens zwei mit ihrem hinteren Ende an einer axial verfahrbaren Revolverscheibe (14) gelagerte Raffrohre (10, 12) vorhanden sind, die abwechselnd in das Raffwerkzeug (22) und in das Preßwerkzeug (34) einfahrbar sind, und daß die Zentrierlager (42, 50) der Raffrohre (10, 12) an der Revolverscheibe (14) angebracht sind.

4. Vorrichtung nach Anspruch 3, **dadurch gekennzeichnet**, daß die Zentrierlager (42, 50) jeweils an den freien Enden von paarweise zusammenwirkenden Zangenhebeln (46, 48) angebracht sind, die an einer in zentraler Lage an der Revolverscheibe (14) befestigten, sich parallel zu den Raffrohren (10, 12) erstreckenden Achse (44) gelagert und zwischen der Abstützstellung und einer offenen Stellung verschwenkbar sind, in welcher sie sich im freien Raum zwischen der Raffstation (18) und der Preß- und Abziehstation (20) befinden.

5. Vorrichtung nach Anspruch 4, **dadurch gekennzeichnet,** daß der Schwenkwinkel zwischen der Abstützstellung und der offenen Stellung etwa 90° beträgt.

6. Vorrichtung nach Anspruch 4 oder 5, **dadurch gekennzeichnet**, daß die Zangenhebel (46, 48) exzentrisch an der Achse (44) gelagert und über zwei konzentrisch drehbar auf der Achse (44) gelagerte Hohlwellen (58, 60) antreibbar sind, deren jede ein Zangenhebelpaar (46, 48) antreibt.

7. Vorrichtung nach Anspruch 6, **dadurch gekennzeichnet**, daß jede Hohlwelle (58, 60) über einen drehfest mit ihr verbundenen, sich radial erstreckenden Arm (56) und einen daran verschieblich geführten Mitnehmer (54) an einem Zangenhebel (46, 48) angreift, der drehfest mit einem Zahnrad (62) verbunden ist, welches mit einem drehfest mit dem paarweise zugeordneten zweiten Zangenhebel (46, 48) verbundenen Zahnrad (62) in Eingriff steht.

8. Vorrichtung nach Anspruch 6 oder 7, **dadurch gekennzeichnet**, daß jede Hohlwelle (58, 60) durch einen an der Revolverscheibe (14) gelagerten Drehantrieb (64, 66) über einen mit diesem und einen mit der Hohlwelle drehfest verbundenen Kurbelarm (68, 70) sowie eine die beiden Kurbelarme (68, 70) verbindende Koppel (72) antreibbar ist.

9. Vorrichtung nach einem der vorhergehenden Ansprüche, **dadurch gekennzeichnet**, daß das Zentrierlager (50) aus zwei Backen mit im wesentlichen V-förmigem Querschnitt beschnitt.

10. Vorrichtung nach einem der vorhergehenden Ansprüche, **dadurch gekennzeichnet**, daß in der Raffstation (18) die Backen des Zentrierlagers (50) vom Raffrohr zurückziehbar sind, nachdem dieses in das Raffwerkzeug eingeführt worden ist, und radial gegen den gerafften Schlauchabschnitt (40) andrückbar sind, nachdem sie bis hinter das Schneidwerkzeug (28) zurückgefahren worden sind, und daß in der Preß- und Abziehstation (20) die Backen des Zentrierlagers (50) von dem gerafften Schlauchabschnitt (40) zurückziehbar sind, nachdem das Raffrohr (10, 12) in das Preßwerkzeug (34) eingeführt worden ist, und gegen das Raffrohr (10, 12) andrückbar sind, nachdem sie bis hinter die den gerafften Schlauchabschnitt (40) vom Raffrohr (10, 12) abstreifende Einrichtung (36) zurückgefahren worden sind.
